# EUROPEAN PATENT APPLICATION

(11) **EP 4 840 670 A1**
(43) Date of publication of application: **18.11.2026**
(21) Application number: 25176743.0
(22) Date of filing: 15.05.2025
(51) Int. Cl.: B60K 35/90, G01S 7/40, G01S 17/931, H04N 17/00, G01S 7/497

(54) **APPARATUS, METHOD AND SYSTEM FOR A CALIBRATION OF AN OPTICAL SENSOR MOUNTED ON A VEHICLE**

(71) Applicant: Mahle International GmbH, 70376 Stuttgart (DE)
(72) Inventor: Triani, Guiseppe, 43122 Parma (IT); Scaramuzza, Tiberio, 43012 Parma (IT); Sohmer, Peter, 78655 Dunningen (DE)

(57) **Abstract**

Apparatus for a calibration of an optical sensor (OS) being mounted on a vehicle (100), the optical sensor being configured for monitoring at least one object in front of the vehicle (100), comprising
- a device for generating a vehicle identification (VIN) for the vehicle (100),
- a projector (P) displaying an image being seen by the optical sensor (OS) for the calibration,
- a first measurement device (L1, L2) characterizing a position of the vehicle (100) with respect to the projector (P) outputting a position signal (PS1, PS2),
- a control unit (CU) loading the image from a database depending on the vehicle identification (VIN) and determining how the image for the calibration is shown on the projector (P) depending on the position signal (PS1, PS2),
- a rotating device (RO) for rotating the projector (P) for the calibration depending on the vehicle identification (VIN).

## Description

The invention relates to an apparatus and a method for a calibration of an optical sensor mounted on a vehicle according to the independent claims.

The document EP 3 588 001 A1 discloses a system and method of calibrating an optical sensor mounted on board of a vehicle. A control unit is configured to adapt or deform an image or video found in a memory to the dimensions of a projection surface in response to a signal representing the type of optical sensor and a distance from the optical sensor.

An apparatus and a method for a calibration of an optical sensor mounted on a vehicle with the features of the independent claims is proposed.

Apparatus for a calibration of an optical sensor being mounted on a vehicle, the optical sensor being configured for monitoring at least one object in front of the vehicle, comprising
- a device for generating a vehicle identification for the vehicle,
- a projector displaying an image being seen by the optical sensor for the calibration,
- a first measurement device characterizing a position of the vehicle with respect to the projector outputting a position signal,
- a control unit loading the image from a database depending on the vehicle identification and determining how the image for the calibration is shown on the projector depending on the position signal,
- a rotating device for rotating the projector for the calibration depending on the vehicle identification.

Method for performing a calibration of an optical sensor (OS) being mounted on a vehicle (100) for monitoring at least one object in front of the vehicle (100), comprising
- generating a vehicle identification (VIN) for the vehicle by a device,
- using a projector (P) displaying an image being seen by the optical sensor (OS) for the calibration,
- characterizing a position of the vehicle (100) with respect to the projector (P) using a first measurement device (L1, L2) outputting a position signal (PS1, PS2),
- loading the image from a database depending on the vehicle identification (VIN) and determining how an image for the calibration is shown on the projector (P) by a control unit (CU) depending on the position signal (PS1, PS2),
- rotating the projector (P) by a rotating device (RO) for the calibration depending on the vehicle identification (VIN).

The apparatus and the method according to the invention have the advantage that the optical sensor is calibrated in a more precise manner, since the position of the vehicle with respect to the apparatus influences how the image is shown on the projector. Thus, even if the vehicle is not exactly positioned due to e.g. human failure with respect to the projector, this situation can be compensated by showing the image accordingly, so that the optical sensor sees the image as if the vehicle has been positioned exactly as desired and demanded by e.g. a vehicle maker.

Another advantage achieved by the apparatus and method according to this invention is that the apparatus is more versatile in being able to rotate the projector depending on a vehicle identification. This vehicle identification can characterize the type of vehicle. For this type of vehicle, the vehicle maker may demand that the image is shown after being rotated for a certain rotation and whether such a rotation is necessary for calibrating the optical sensor. In addition, a height of the image, what the image looks like and also the distance between the image and the vehicle can be defined by the vehicle maker and therefore performed for the calibration.

The vehicle identification can be obtained by the apparatus in different ways. It could be inputted by a user in a garage. This data input could be performed using a tablet computer choosing the vehicle which is front of the technician on a selection menu. Then, the device is the input device. The vehicle identification can also be received from the vehicle for example over an onboard diagnostics connector or a wireless connection. Another possibility is that the vehicle identification is derived by a sensor which for example identifies the vehicle identification from looking at the license plate of the vehicle. The sensor could be part of the apparatus, e.g. a camera. A further possibility is to use a diagnostics device, e.g. a smart device that is wirelessly connected to the vehicle and obtains the vehicle identification from the vehicle, e.g. the so-called vehicle identification number.

The apparatus is usually in garage, i.e. a vehicle repair workshop. A need for calibration an optical sensor of a vehicle which is for example a front camera is given, if the windshield of a vehicle is to be replaced. This is due to a number of safety features depending on the accuracy of the monitoring of the traffic situation by this optical sensor. Such safety features are an emergency braking, all kinds of automated driving or parking. An inaccuracy could result in damage to property or life. So, such a calibration is needed after installing a new windshield. The optical sensor such as a front camera is configured to perform such a calibration if the calibration situation is being recognized. For example, for certain types of optical sensors and certain types of vehicles several patterns as the respective image are predefined for the calibration. Such a predefined pattern as the image needs then to be shown on the projector for performing the calibration. The optical sensor can get a signal by the apparatus that the calibration can start. These predefined patterns could be loaded from a local electronic memory or downloaded from a database, e.g. over the internet or from a local database.

The apparatus comprises several components such as the projector, the first measurement device, the control unit and others which are not relevant for this invention. Also, for the calibration of other optical sensors such a rear view camera or for monitoring each side of the vehicle could be calibrated with additional equipment.

A calibration is a comparison of measurement values delivered by a device under test with those of a calibration standard of known accuracy. The second values could be stored in the optical sensor itself or other memories in the vehicle. Alternatively, the values could also be provided outside of the vehicle, for example by the apparatus. This comparison could be followed by an adjustment of parameters in the optical sensor if the comparison shows at least one significant error or at least a significant deviation.

As mentioned above the optical sensor is for example a front-facing camera for monitoring at least one object in front of the vehicle. With that information, it is possible to direct a vehicle safely through traffic and avoid any collisions. Also, other safety features such as emergency braking are possible with that information. Such a front-facing camera is for example mounted in the middle of the topside of the windshield. Other positions are possible.

The vehicle could be a car, van, truck or other vehicle using such optical sensors for their operation.

The projector could be any display capable of displaying an image for the calibration. Examples are a television set, other monitors or a projection screen which a beamer is for example projecting the image. So, all kinds of displaying technologies can be used.

The first measurement device can characterize the position of the vehicle with respect to the apparatus. Therefore, one or more distances between the vehicle and the apparatus or other known elements are measured by the first measurement device. For these measurements, it may be advantageous to put on the vehicle at least one element which makes the measurement possible or easier. One example is a wheel clamp with reflectors. The reflectors reflect for example light emitted by the first measurement device, so that the first measurement device can receive the reflected light and derive the distance out of this measurement. A laser could be used for such a measurement. Knowing the precise position of the vehicle with respect to the apparatus leads to the display of an image for calibration, the display compensating for the position with respect to an ideal position. The position signal is then carrying the information for determining the position of the vehicle with respect to the apparatus or the projector.

The first measurement device could place below the projector and at the side so potentially facing the wheels of the vehicle.

A control unit as part of the apparatus comprises one or more processors or controllers for performing a determination how an image for the calibration is shown on the projector depending on the position signal. The position signal characterizes the position of the vehicle with respect to the projector, so the display of the image is such that it compensates for any deviation of the actual position of the vehicle compared to an ideal position of the vehicle. This could compensate for deviations in distance and/or angle. The control unit could be a separate unit with its own housing, it could be distributed over several units all together taking over the functionality of the control unit.

The image could be a pattern of white and black symbols, the symbols being squares, circles and/or rectangles. Also a video of such patterns could be possible.

The rotation device is a mechanism that can rotate the projector to any desired rotation. The rotation could be manually or automatically performed. If automatically performed, the control unit could control an electric motor performing the desired rotation. If the rotation is manually performed, the person doing this needs to check whether the desired rotation has been achieved.

As defined in a dependent claim, the rotation could be 90°.

This mechanism comprises an actor which rotates the projector in response for example to a rotation signal which is generated and sent by the control unit to this actor. The control unit receives for this generation of the rotation signal a vehicle identification which could be received from an input device, a user selecting a certain vehicle type, or from the vehicle itself as an identifier or the vehicle identification is generated depending on calibration results in order to improve them by an additional measurement. The control unit processes the vehicle type signal to extract the information whether a rotation of the projector should be performed.

According to the dependent claims advantageous improvements of the apparatus and the method according to the independent claims are possible.

It could be an advantage that the first measurement device exhibits an optical sender and an optical receiver emitting a first optical signal and receiving a second optical signal for measuring at least one first distance between the apparatus and the vehicle. For example, a laser system could be used. It could employ semiconductor lasers or solid-state lasers or gas lasers.

According to another aspect of the invention, it could be advantageous that the optical sender exhibits at least one laser. It could also be a laser array.

According to another aspect of the invention, it could be advantageous that the apparatus comprises a second measurement device supporting the vehicle to move to the position. That means that using the second measurement device it is possible to realize a first alignment of the vehicle with respect to the apparatus. Using the first measurement device, a digital alignment is realized without moving the vehicle. The second alignment is finer than the first alignment.

The support of the movement of the vehicle means that hints a given to a driver where to move the car to place it in an optimum position. These hints or information could be displayed on the projector. Additional acoustic signals could be sent to the driver. Optical information could be sent to a diagnostics device such as a tablet computer to be displayed on a display of the tablet computer.

According to another aspect of the invention, it could be advantageous that the second measurement device is connected to the projector such that the projector shows at least one suggestion where to move the vehicle in response to an indication signal being sent by the second measurement device to the projector. In this way, the projector helps to park the vehicle in an optimum position with respect to the projector.

According to another aspect of the invention, it could be advantageous that the second measurement device is configured to measure at least one second distance between the apparatus and the vehicle using at least one ultrasonic signal. To use an ultrasound sensor for parking such as here, is a proven technology.

According to another aspect of the invention, it could be advantageous that the rotating device is configured to rotate the projector by 90° in response to the rotation signal. 90° has proven to be an advantageous rotation for calibration.

According to another aspect of the invention, it could be advantageous that the device comprises at least one camera generating a vehicle identification. The camera is for example below the projector and generates an image of a license plate of the vehicle. This could lead to a vehicle identification number. Using the vehicle identification number, the control unit can search a database for loading the necessary image for calibration and also other parameters for the calibration, e.g. what should be the distance between the projector and the optical sensor or whether the image should be rotated when being used for the calibration.

According to another aspect of the invention, a system with the apparatus according to the invention with the vehicle is proposed, the vehicle showing wheel clamps being mounted on the wheels of one axle of the vehicle, the wheel clamps being configured such that the measurement device measures the at least one first distance between the wheel clamps and the measurement device for outputting the position signal. The wheel clamps are designed to be suitable targets, so that a reflection or the image of a part of a wheel clamp could be used to determine the distance.

Examples of the invention are shown in the drawing and explained in the specification.
Fig. 1 shows a block diagram of the apparatus with the vehicle,
Fig. 2 shows schematically a first measurement device,
Fig. 3 shows a projector with a suggestion,
Fig. 4 shows s simplified block diagram of the apparatus,
Fig. 5a shows a horizontal orientation of the projector,
Fig. 5b shows a vertical orientation of the projector,
Fig. 6 a flow chart of the method and
Fig. 7 the vehicle in front of the projector.

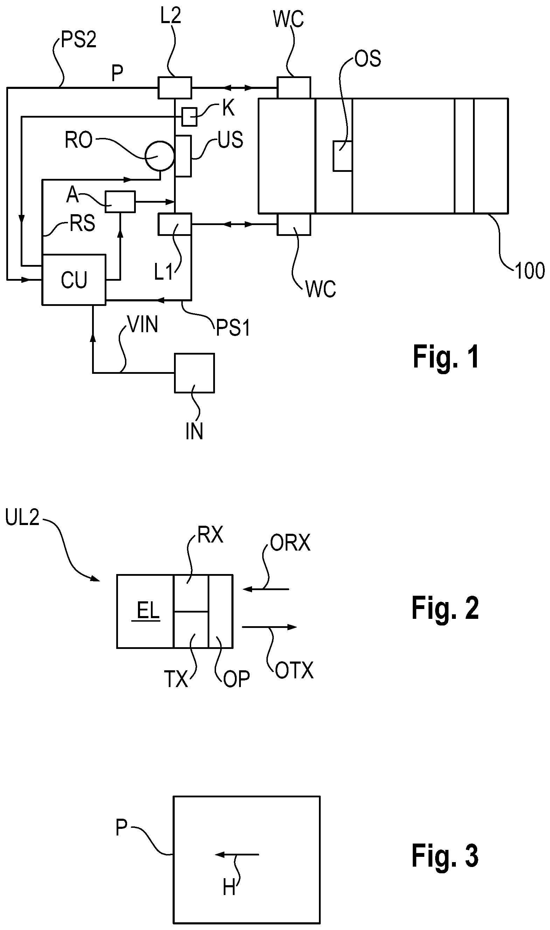

Fig. 1 shows a block diagram of the apparatus with the vehicle 100.

First, it is determined what the vehicle identification of the vehicle 100. This could be determined manually by a technician or automatically using sensors such as a camera K looking at the license plate or the vehicle 100 to determine the type of vehicle and with that the vehicle identification which could be the vehicle identification number. The camera K is therefore connected to the control unit CU to transmit a signal to the control unit characterizing the vehicle 100. Either the camera K or the control unit CU determine the vehicle identification VIN. The vehicle identification VIN is used to load the necessary image and other calibration data from a database.

This calibration data comprises the position of the vehicle 100 in which it is to be parked in front of the projector P.

The vehicle 100 is positioned in front of the projector P, so that an optical sensor OS mounted on the vehicle 100 looks at the projector P. The vehicle 100 is equipped with wheel clamps WC one at each front wheel. The wheel clamps WC are mounted on wheels of one axle of the vehicle 100. In this example, it is the front axle of the vehicle 100.

The wheel clamps WC could be put on the front wheels by a technician in the workshop. The wheel clamps WC serve to reflect the light coming from the two first measurement devices L1, L2 for measuring the distance between the vehicle 100 and the projector P.

The first measurement devices L1, L2 are laser distance measurement devices. With the two distances measured between the projector P and the vehicle 100, it is possible to determine whether these distances are as predefined but also whether the vehicle 100 stands oblique with respect to the projector P. This is the case if the two measured distances are different.

Before the first measurement devices L1, L2 can start, a second measurement device US is used to park the vehicle 100 in front of the projector P in a certain position. This position depends on the vehicle identification because the vehicle identification determines which position of the vehicle 100 is demanded for the calibration of the optical sensor OS. The second measurement device US measures the distance between the vehicle 100 and the projector P and causes the projector P to display suggestions to the driver of the vehicle when to drive and when to stop. Therefore, the second measurement device US is an ultrasonic sensor which is a well-established sensor used in parking situations.

Thus, after obtaining the vehicle identification, the vehicle 100 is parked using the second measurement devices US and the vehicle identification dependent data for the calibration in the desired position. Then in the parked position, the first measurement devices L1, L2 perform a second measurement for displaying the image on the projector P such as if the vehicle 100 is ideally parked.

The two first measurement devices L1, L2 are placed below the projector P and so that they can see the wheel clams WC. Both devices L1 and L2 transmit a respective position signal PS1 and PS2 to a control unit CU. The control unit CU determines the position of the vehicle 100 with respect to the projector P. Is the vehicle 100 placed in an oblique manner, the control unit CU sends a control signal to the driver A for the projector P, so that the display of an image for calibrating the optical sensor OS can be deformed in such a way that it compensates the positioning of the vehicle 100. The driver A is an electronic unit to drive the projector P.

The driver A takes care that the projector P displays the image with the predefined pattern and the desired colours, e.g. black and white.

If the control unit CU recognizes that the projector P should be rotated for the calibration process, then the control unit CU sends a rotation signal RS to the rotation device RO which drives an actor to rotate the projector P for the desired angle. An example is a rotation for 90°. Alternatively, the rotation is performed manually by a technician in the workshop.

This can already happen in the beginning of the calibration process, even before the vehicle 100 is parked in front of the projector P, for example if the vehicle identification is already known and requires for example only the rotated projector P.

For recognizing that a rotation is needed, the control unit CU gets information using the vehicle identification VIN which is sent from an input device IN, e.g. a keyboard. The technician could manually select the vehicle in a diagnostics device, e.g. tablet computer and this generates the vehicle identification. Alternatively, the VIN signal could be transmitted from the vehicle 100 either over the onboard diagnostics connector or wireless, e.g. over Wifi. Also, the control unit CU could generate the vehicle type signal VIN, if for example a calibration result shows the need for it.

Fig. 2 shows schematically a first measurement device L1, L2. The laser scanner L1, L2 emits a first optical signal OTX and receives a second optical signal ORX. Therefore, the laser scanner L1, L2 comprises an electronics part EL for signal generation, modulation and demodulation, a sender TX for generating the laser light and a receiver RX for receiving the laser light and converting it to an electric signal. The laser scanner could use for measuring a distance the time-of-flight principle.

Also, an optical part OP with lenses is in front of the receiver RX and the sender TX for forming the desired beams.

Fig. 3 shows a projector P with a suggestion H for parking the vehicle 100. Here, the suggestion is to drive to the left. Other hints like traffic lights could be employed.

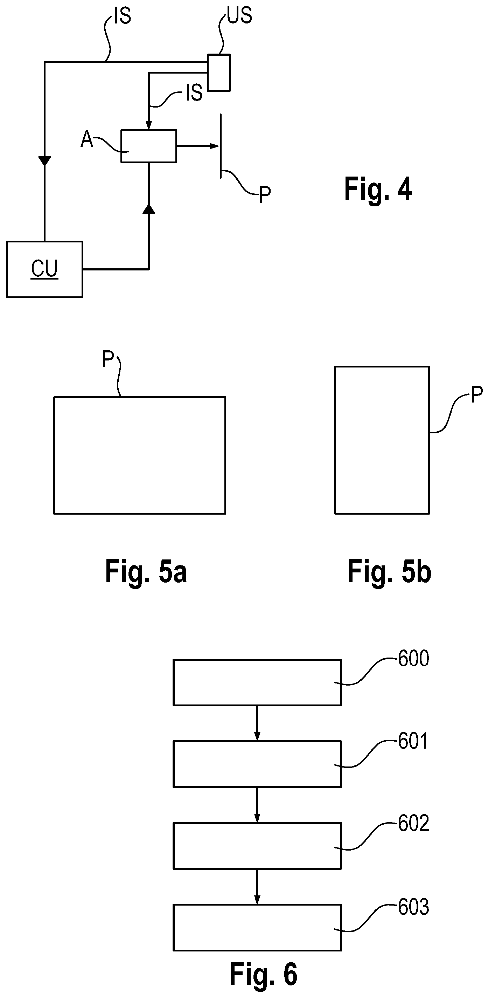

Fig. 4 shows s simplified block diagram of the apparatus focusing on the second measurement device US. The second measurement device US is preferably an ultrasound sensor. The ultrasound sensor US transmits an indication signal IS either to the control unit US or to the driver A. It could be sent to both as well. The driver A drives then the projector P such that a suggestion is displayed on the projector P depending on the indication signal IS. Which suggestion is displayed could be either determined by the ultrasound sensor US or the control unit CU or the driver A.

Fig. 5a shows the projector P in horizontal orientation. That means the longer side of the projector P is horizontally placed whereas the shorter side is vertically oriented.

Fig. 5b shows the projector P in vertical orientation. That means the shorter side of the projector P is horizontally placed whereas the longer side is vertically oriented.

Fig. 6 shows a flow chart of the method according to the invention. In step 600, the vehicle 100 is identified generating a vehicle identification VIN. Using the vehicle identification VIN, the apparatus is able to display the correct image on the projector P, projector P being seen by the optical sensor OS is used for calibration. The vehicle 100 is parked in a desired position in front of the projector P for the calibration. For this parking, a second measurement device US can be used.

In step 601 a position of the vehicle 100 with respect to the projector P is characterized using a first measurement device L1, L2 outputting a position signal PS1, PS2.

In step 602 it is determined how an image for the calibration is shown on the projector P by a control unit CU depending on the position signal PS1, PS2.

In step 603 the projector P is rotated for the calibration depending on the vehicle identification VIN. Then the calibration is performed.

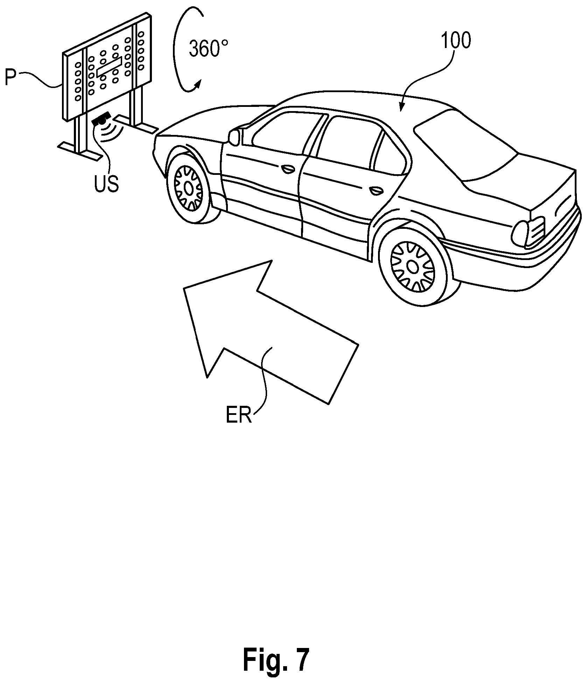

In Fig. 7, the vehicle 100 is parked in front of the projector P with a pattern on it. The vehicle 100 is driven in the direction of ER towards the projector P.

Below the projector P, the ultrasound sensor US is mounted for a pre alignment measuring a distance and an alignment. The projector P is rotatable for 360°. After the prealignment, a digital fine alignment is performed using for example laser measurement devices.

### Reference numerals:

- 100:: vehicle
- P:: projector
- US:: ultrasound sensor
- RO:: rotating device
- A:: driver for projector
- CU:: control unit
- L1, L2:: first and second laser sensor
- PS1, PS2:: position signals
- RS:: rotation signal
- VIN:: vehicle identification
- IN:: input device
- WC:: wheel clamp
- OS:: optical sensor
- EL:: electronic unit
- RX:: optical receiver
- TX:: optical sender
- OTX:: optical sender signal
- ORX:: optical receiver signal
- OP:: optics
- H:: suggestion
- 600-603:: method steps
- ER:: direction for the vehicle
- 10:: rotation
- IS:: indication signal

## Claims

1. Apparatus for a calibration of an optical sensor (OS) being mounted on a vehicle (100), the optical sensor being configured for monitoring at least one object in front of the vehicle (100), comprising
- a device for generating a vehicle identification (VIN) for the vehicle (100),
- a projector (P) displaying an image being seen by the optical sensor (OS) for the calibration,
- a first measurement device (L1, L2) characterizing a position of the vehicle (100) with respect to the projector (P) outputting a position signal (PS1, PS2),
- a control unit (CU) loading the image from a database depending on the vehicle identification (VIN) and determining how the image for the calibration is shown on the projector (P) depending on the position signal (PS1, PS2),
- a rotating device (RO) for rotating the projector (P) for the calibration depending on the vehicle identification (VIN).

2. Apparatus according to claim 1 **characterized in that** the first measurement device (L1, L2) comprises an optical sender (TX) and receiver (RX) emitting a first optical signal (OTX) and receiving a second optical signal (ORX) for measuring at least one first distance between the apparatus and the vehicle (100).

3. Apparatus according to claim 2 **characterized in that** the optical sender (TX) exhibits at least one laser.

4. Apparatus according to one of the preceding claims **characterized in that** the apparatus comprises a second measurement device (US) supporting the vehicle (100) to move to the position.

5. Apparatus according to claim 4 **characterized in that** the second measurement device (US) is connected to the projector (P) such that the projector (P) shows at least one suggestion (H) where to move the vehicle (100) in response to an indication signal (IS) being sent by the second measurement device (US) to the projector (P).

6. Apparatus according to claim 4 or 5 **characterized in that** the second measurement device (US) is configured to measure at least one second distance between the apparatus and the vehicle (100) using at least one ultrasonic signal.

7. Apparatus according to one of the preceding claims **characterized in that** the rotating device (RO) is configured to rotate the projector (P) by 90°.

8. Apparatus according to one of the preceding claims **characterized in that** the device comprises at least one camera (K) generating a vehicle identification (VIN).

9. Method for performing a calibration of an optical sensor (OS) being mounted on a vehicle (100) for monitoring at least one object in front of the vehicle (100), comprising
- generating a vehicle identification (VIN) for the vehicle by a device,
- using a projector (P) displaying an image being seen by the optical sensor (OS) for the calibration,
- characterizing a position of the vehicle (100) with respect to the projector (P) using a first measurement device (L1, L2) outputting a position signal (PS1, PS2),
- loading the image from a database depending on the vehicle identification (VIN) and determining how an image for the calibration is shown on the projector (P) by a control unit (CU) depending on the position signal (PS1, PS2),
- rotating the projector (P) by a rotating device (RO) for the calibration depending on the vehicle identification (VIN).

10. Method according to claim 8 **characterized by** supporting the vehicle (100) to move to the position by a second measurement device (US).

11. Method according to claim 8 or 9 **characterized in that** the rotating device (RO) is configured to rotate the projector (P) by 90°.

12. System with the apparatus according to one of the claims 1-8 with the vehicle (100), the vehicle showing wheel clamps (WC) being mounted on the wheels of one axle of the vehicle, the wheel clamps (WC) being configured such that the measurement device (L1, L2) measures the at least one first distance between the wheel clamps and the measurement device for outputting the position signal (PS).
